Europäisches Patentamt

European Patent Office

Office européen des brevets

(19)

(11) Veröffentlichungsnummer: **0 145 858**
**B1**

(12) # EUROPÄISCHE PATENTSCHRIFT

(45) Veröffentlichungstag der Patentschrift:
**19.11.87**

(51) Int. Cl.⁴: **F 16 K  11/22, F 16 K  31/42**

(21) Anmeldenummer: **84111137.0**

(22) Anmeldetag: **19.09.84**

(54) Magnetventileinrichtung.

(30) Priorität: **17.12.83  DE 3345697**

(43) Veröffentlichungstag der Anmeldung:
**26.06.85 Patentblatt 85/26**

(45) Bekanntmachung des Hinweises auf die Patenterteilung:
**19.11.87 Patentblatt 87/47**

(84) Benannte Vertragsstaaten:
**AT CH DE FR GB IT LI NL SE**

(56) Entgegenhaltungen:
**DE - A - 2 224 180**
**DE - A - 2 541 563**
**FR - A - 2 341 462**

(73) Patentinhaber: **WABCO Westinghouse
Fahrzeugbremsen GmbH, Am Lindener
Hafen 21 Postfach 91 12 80, D-3000 Hannover 91 (DE)**

(72) Erfinder: **Lichtenberg, Wolfgang, Ossietzkyring 32,
D-3000 Hannover 91 (DE)**

(74) Vertreter: **Schrödter, Manfred, WABCO Westinghouse
Fahrzeugbremsen GmbH Am Lindener
Hafen 21 Postfach 91 12 80, D-3000 Hannover 91 (DE)**

## Beschreibung

Die Erfindung betrifft eine Magnetventileinrichtung gemäss dem Oberbegriff des Patentanspruchs 1.

Derartige vorgesteuerte Magnetventileinrichtungen werden in Druckluftanlagen und druckluftbetriebenen Einrichtungen eingesetzt, wenn kurze Schaltzeiten und eine feinfühlige Regelung gewünscht werden bzw. erforderlich sind.

Aus der DE-A- 22 24 180 ist eine vorgesteuerte Magnetventileinrichtung bekannt, die sich im wesentlichen aus einem Einlassventil und einem Auslassventil zusammensetzt, wobei sowohl das Einlassventil als auch das Auslassventil als Membranventile ausgebildet sind. Die dem Einlassventil zugeordnete Membran begrenzt mit einer ersten Wirkfläche eine Eingangskammer und mit einer zweiten Wirkfläche, welche der ersten Wirkfläche entgegengerichtet ist, eine erste Steuerkammer. In gleicher Weise begrenzt die dem Auslassventil zugeordnete Membran mit einer ersten Wirkfläche eine Ausgangskammer und mit einer zweiten Wirkfläche, welche der ersten Wirkfläche entgegengerichtet ist, eine zweite Steuerkammer. Über Elektromagnetventile, welche den beiden Steuerkammern vorgeschaltet sind, werden die Steuerkammern be- und entlüftet, wobei die Entlüftung zur Atmosphäre hin erfolgt.

Der Erfindung liegt die Aufgabe zugrunde, eine Magnetventileinrichtung der eingangs beschriebenen Art mit einfachen Mitteln derart zu verbessern, dass gegenüber der bekannten Magnetventileinrichtung eine feinfühligere Regelung ermöglicht wird.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, den Verbraucher nach einer Schliessung des Einlassventils in zwei Stufen belüften zu können, wobei die Belüftung des Verbrauchers in der ersten Stufe über den kleinen Querschnitt des zugeordneten Elektromagnetventils und in der zweiten Stufe über den grossen Querschnitt des Mambranventils erfolgt. In der erwähnten ersten Stufe wird also Druckmittel aus der Steuerkammer in die Ausgangskammer geleitet. Durch diese Massnahme wird eine sehr feinfühlige Regelung erzielt. Ein weiterer Vorteil der Erfindung ist darin zu sehen, dass der Druckluftverbrauch reduziert wird, da die erste Steuerkammer nicht mehr zur Atmosphäre hin, sondern in den Verbraucher hinein entlüftet wird.

Gemäss einer vorteilhaftem Weiterbildung der Erfindung ist das Auslassventil der Magnetventileinrichtung im wesentlichen in gleicher Weise aufgebaut wie das Einlassventil, so dass auch ein sehr fein abstufbarer Druckabbau im Verbraucher erzielbar ist.

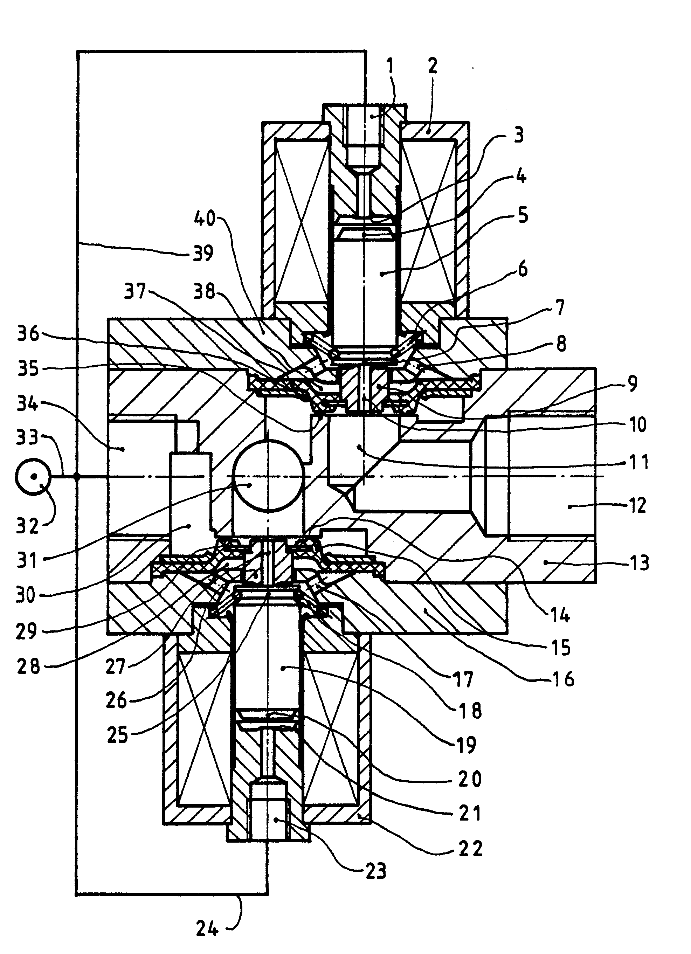

Anhand der Zeichnung wird ein Ausführungsbeispiel der Erfindung näher erläutert.

Die Abbildung zeigt eine vorgesteuerte Magnetventileinrichtung, bei welcher die Steuerkammer des Einlassventils mit dem Verbraucher verbindbar ist.

In einem von zwei Deckeln 40 und 16 verschlossenen Ventilgehäuse 13 sind eine Eingangskammer 30, eine Ausgangskammer 31 und eine Auslasskammer 11 angeordnet. Die Eingangskammer 30 ist über einen Druckmittelanschluss 34 und eine Druckmittelleitung 33 mit einer Druckmittelquelle 32 verbunden; die Ausgangskammer 31 steht mit einem Verbraucher in Verbindung und die Auslasskammer 11 ist über einen Druckmittelauslass 12 mit der Atmosphäre verbunden. Die Eingangskammer 30 und die Ausgangskammer 31 sind über ein Einlassventil miteinander verbindbar, welches aus einem gehäusefesten Einlassventilsitz 14 und einem Einlassventilkörper besteht. Der Einlassventilkörper ist als Membran 15 ausgebildet, die auf ihrer dem Einlassventilsitz 14 zugewandten Seite einen Dichtungsvorsprung 29 besitzt. Die Membran 15 weist eine zentrisch angeordnete Ausnehmung auf, in welcher ein mit einer Längsbohrung 27 versehener rotationssymmetrischer Körper 26 angeordnet und fest mit der Membran 15 verbunden ist. Der im folgenden als Ventilsitz bezeichnete rotationssymmetrische Körper 26 ist Bestandteil eines ersten Elektromagnetventils 22 und wird in einer Ausnehmung des Ventilgehäuses 13 geführt. Die Membran 15 trennt die Eingangskammer 30 von einer ersten Steuerkammer 28.

Das im vorstehenden erwähnte erste Elektromagnetventil 22 ist am Deckel 16 des Ventilgehäuses 13 derart angeordnet, dass sein Anker 19 auf den Ventilsitz 26 zu bzw. von diesem weg bewegbar ist. Der Anker 19 weist an seiner dem Ventilsitz 26 zugewandten Seite einen Ventilkörper 25 auf, welcher mittels einer auf den Anker 19 einwirkenden Feder 18 am Ventilsitz 26 zur Anlage gebracht wird. Der Ventilsitz 26 und der mit dem Anker 19 verbundene Ventilkörper 25 bilden ein Ausslassventil 26, 19, 25, über welches die erste Steuerkammer 28 mit der Ausgangskammer 31 verbindbar ist. An der dem Auslassventil 26, 19, 25 abgewandten Stirnseite des Ankers 19 ist ein weiterer Ventilkörper 20 vorgesehen, der mit einem im Führungsrohr des Elektromagnetventils 22 angeordneten Ventilsitz 21 ein Einlassventil 21, 19, 20 bildet, über welches die erste Steuerkammer 28 mit der Druckmittelquelle 32 verbindbar ist.

Ein am ersten Elektromagnetventil 22 vorgesehener Anschluss 23 ist über eine Druckmittelleitung 24 mit der Druckmittelquelle 32 verbunden. Im Deckel 16 des Ventilgehäuses 13 sind im Bereich des Auslassventils 19, 25, 26, des ersten Elektromagnetventils 22 Bohrungen 17 vorgesehen, über welche die erste Steuerkammer 28 be- und entlüftet wird. Die Ausgangskammer 31 und die zur Atmosphäre hin führende Auslasskammer 11 sind über ein Auslassventil miteinander verbindbar. Das Auslassventil wird von einem gehäusefesten Ventilsitz 35 und einer mit einem Dichtungsvorsprung 36 versehenen Membran 37 gebildet. Die Membran 37 begrenzt mit einer ersten Wirkfläche die Ausgangskammer 31 und mit einer der Ausgangskammer 31 abgewandten zweiten Wirkfläche eine zweite Steuerkammer 38. Die Membran 37 weist eine zentrisch angeordnete Ausnehmung auf, in welcher ein als Ventilsitz für ein zweites Elektromagnetventil 2 dienender, mit einer Längsbohrung 10 versehener rotationssymmetrischer Körper Ventilsitz 9 angeordnet und fest mit der Membran 37 verbunden ist. Der Ventilsitz 9 wird in einer Ausnehmung des Ventilgehäuses 13 geführt. Am Deckel 40 des Ventilgehäuses 13 ist das vorstehend erwähnte zweite Elektromagnetventil 2 derart angeordnet, dass sein Anker 5 auf den Ventilsitz 9 zu bzw. von diesem weg bewegbar ist. Der Anker 5 weist an seiner dem Ventilsitz 9 zugewandten Seite einen Ventilkörper 7 auf, welcher mittels einer auf den Anker 5 einwirkenden Feder 6 am Ventilsitz 9 zur Anlage gebracht wird. Der Ventilsitz 9 und der mit dem Anker 5 verbundene Ventilkörper 7 bilden ein Auslassventil 9, 5, 7, über welches die zweite Steuerkammer 38 mit der Auslasskammer 11 verbindbar ist. An der dem Auslassventil 9, 5, 7 des zweiten Elektromagnetventils 2 abgewandten Stirnseite des Ankers 5 ist ein zweiter Ventilkörper 4 vorgesehen, der mit einem im Führungsrohr des Elektromagnetventils 2 angeordneten Ventilsitz 3 ein Einlassventil 3, 5, 4 bildet, über welches die zweite Steuerkammer 38 mit der Druckmittelquelle 32 verbindbar ist.

Ein am zweiten Magnetventil 2 vorgesehener Druckmittelanschluss 1 ist über eine Druckmittelleitung 39 mit der Druckmittelquelle 32 verbunden. Im Deckel 40 des Ventilgehäuses 13 sind im Bereich des Auslassventils 9, 7, 5 des zweiten Elektromagnetventils 2 Bohrungen 8 vorgesehen, über welche die zweite Steuerkammer 38 be- und entlüftet wird.

Die Funktion der im vorstehenden beschriebenen vorgesteuerten Magnetventileinrichtung wird nachfolgend näher erläutert.

Es wird angenommen, dass ein mit dem Druckmittelausgang der Magnetventileinrichtung verbundener Verbraucher belüftet worden ist und die Magnetventileinrichtung, wie in der Abbildung dargestellt, sich in der Abschlussstellung befindet. Das Einlassventil 14, 15, 29 ist geschlossen, so dass die Druckmittelzufuhr von der Druckmittelquelle 32 zum Verbraucher unterbrochen ist. Das Auslassventil 35, 36, 37 befindet sich ebenfalls in der Schliessstellung so dass auch die Verbindung vom Verbraucher zur Atmosphäre hin unterbrochen ist. Über die Druckmittelleitung 33 steht Druckmittel in der Eingangskammer 30 an und belastet die als erster Steuerkolben dienende Membran 15 in Richtung auf die erste Steuerkammer 28 zu. Über das geöffnete Einlassventil 21, 20, 19 des als erstes Steuerventil dienenden Elektromagnetventils 22 steht Druckmittel aus der Druckmittelquelle 32 in der ersten Steuerkammer 28 an und belastet die Membran 15 in Richtung auf die Eingangskammer 30 zu. Da die der ersten Steuerkammer 28 zugewandte Wirkfläche der Membran 15 grösser ist als die der Eingangskammer 30 zugewandte Wirkfläche wird der Einlassventilkörper 29, 15 auf seinem zugeordneten Sitz 14 gehalten.

In der Ausgangskammer steht der Verbraucherdruck an und beaufschlagt die als zweiter Steuerkolben dienende Membran 37 in Richtung auf die zweite Steuerkammer 38 zu.

Da gleichzeitig Versorgungsdruck über die Druckmittelleitung 39, den Druckmittelanschluss 1 sowie das geöffnete Einlassventil 3, 4, 5 des als zweites Steuerventil dienenden Elektromagnetventils 2 in der zweiten Steuerkammer ansteht und die grössere Wirkfläche der Membran 37 in Richtung auf die Ausgangskammer 31 zu beaufschlagt, wird das Auslassventil 35, 36, 37 in der Schliessstellung gehalten.

Soll der Druck im Verbraucher abgesenkt werden, so wird das zweite Elektromagnetventil 2 mittels eines elektrischen Signals umgeschaltet. Das Einlassventil 3, 4, 5 des zweiten Elektromagnetventils 2 schliesst und das Auslassventil 9, 7, 5 des zweiten Elektromagnetventils 2 öffnet. Der Druck in der zweiten Steuerkammer 38 baut sich über die Auslasskammer 11 zur Atmosphäre hin ab. Die Kraft des in der Ausgangskammer 31 anstehenden, auf die Membran 37 einwirkenden Verbraucherdruckers überwiegt jetzt, so dass der Auslassventilkörper 36, 37 von seinem Sitz 35 abgehoben wird. Über das jetzt geöffnete Auslassventil 35, 36, 37 und die Auslasskammer 11 wird der Druck in der Ausgangskammer 31 und somit auch der Druck im Verbraucher abgebaut. Wird das zweite Elektromagnetventil 2 wieder umgesteuert, so gelangt das Auslassventil 9, 7, 5 des zweiten Elektromagnetventils 2 in die Schliessstellung und das entsprechende Einlassventil 3, 4, 5 wird geöffnet. Über die Druckmittelleitung 39, den Druckmittelanschluss 1 und das geöffnete Einlassventil 3, 4, 5 des zweiten Elektromagnetventils 2 wird die zweite Steuerkammer 38 mit Druck beaufschlagt. Das Auslassventil 35, 36, 37 gelangt in die Schliessstellung.

Soll in den Verbraucher wieder Druck eingesteuert werden, so wird das erste Elektromagnetventil 22 angesteuert. Das Einlassventil 21, 20, 19 des ersten Elektromagnetventils 22 schliesst und das entsprechende Auslassventil 26, 25, 19 öffnet. Das Druckmittel aus der ersten Steuerkammer 28 gelangt in die Ausgangskammer 31 und somit in den Verbraucher. Die Kraft des in der Eingangskammer 30 anstehenden und die Membran 15 belastenden Versorgungsdruckes aus der Druckmittelquelle 32 hebt den Einlassventilkörper 15, 29 von seinem Sitz 14 ab. Über das jetzt geöffnete Einlassventil 14, 15, 29 und die Ausgangskammer 31 wird Druck in den Verbraucher eingesteuert.

Soll der Druck im Verbraucher gehalten werden, so wird das erste Elektromagnetventil 22 umgesteuert. Das Auslassventil 26, 25, 19 des ersten Elektromagnetventils 22 schliesst und das entsprechende Einlassventil 21, 20, 19 gelangt in die Offenstellung. Die erste Steuerkammer 28 wird wieder mit Versorgungsdruck beaufschlagt.

Aufgrund der Differenz zwischen den Wirkflächen der sowohl die Eingangskammer 30 als auch die erste Steuerkammer 28 begrenzenden Membran 15 wird das Einlassventil 14, 15, 29 in die Schliessstellung gebracht.

Es ist auch möglich, als Steuerdruck für das Auslassventil 35, 36, 37 den Verbraucherdruck aus der Ausgangskammer 31 der zweiten Steuerkammer 38 zuzuführen.

**Patentansprüche**

1. Magnetventileinrichtung mit folgenden Merkmalen,

a) es ist eine mit einer Druckmittelquelle (32) verbundene Eingangskammer (30) vorgesehen;

b) es ist eine mit einem Verbraucher verbundene Ausgangskammer (31) vorgesehen;

c) die Eingangskammer (30) und die Ausgangskammer (31) sind über ein Einlassventil (14, 15, 29) miteinander verbindbar;

d) der Ventilkörper (15, 29) des Einlassventils (14, 15, 29) ist an einem ersten Steuerkolben (15) angeordnet, welcher die Eingangskammer (30) von einer ersten Steuerkammer (28) trennt;

e) es ist ein erstes Steuerventil (22) vorgesehen, über welches die erste Steuerkammer (28) be- und entlüftbar ist;

f) es ist ein Auslassventil (35, 36, 37) vorgesehen, über welches die Ausgangskammer (31) mit der Atmosphäre verbindbar ist;

g) der Ventilkörper (36, 37) des Auslassventils (35, 36, 37) ist an einem zweiten Steuerkolben (37) angeordnet, welcher die Ausgangskammer (31) von einer zweiten Steuerkammer (38) trennt;

h) es ist ein zweites Steuerventil (2) vorgesehen, über welches die zweite Steuerkammer (38) be- und entlüftbar ist;

dadurch gekennzeichnet, dass das erste Steuerventil (22) derart ausgebildet und derart angeordnet ist, dass die erste Steuerkammer (28) einerseits mit der Druckmittelquelle (32) und andererseits mit der Ausgangskammer (31) verbindbar ist.

2. Magnetventileinrichtung nach Anspruch 1, dadurch gekennzeichnet, dass das Auslassventil (26, 25, 19) des ersten Steuerventils (22), über welches die erste Steuerkammer (28) mit der Ausgangskammer (31) verbindbar ist, von einer im ersten Steuerkolben (15) vorgesehenen Ausnehmung und einem mit dem Anker (19) des ersten Steuerventils (22) zusammenwirkenden Ventilkörper (25) gebildet wird.

3. Magnetventileinrichtung nach Anspruch 2, dadurch gekennzeichnet, dass der Ventilkörper (25) an der dem Steuerkolben (15) zugewandten Stirnseite des Ankers (19) befestigt ist.

4. Magnetventileinrichtung nach wenigstens einem der vorhergehenden Ansprüche, dadurch gekennzeichnet, dass die der ersten Steuerkammer (28) zugewandte Wirkfläche des Steuerkolbens (15) grösser ausgebildet ist als die der Eingangskammer (30) zugewandte Wirkfläche des ersten Steuerkolbens (15).

5. Magnetventileinrichtung nach Anspruch 1, dadurch gekennzeichnet, dass das zweite Steuerventil (2) derart ausgebildet und derart angeordnet ist, dass die zweite Steuerkammer (38) einerseits mit der Druckmittelquelle (32) und andererseits mit der Atmosphäre verbindbar ist.

6. Magnetventileinrichtung nach Anspruch 1, dadurch gekennzeichnet, dass das zweite Steuerventil (2) derart ausgebildet und derart angeordnet ist, dass die zweite Steuerkammer (38) einerseits mit der Ausgangskammer (31) und andererseits mit der Atmosphäre verbindbar ist.

7. Magnetventileinrichtung nach wenigstens einem der vorhergehenden Ansprüche, dadurch gekennzeichnet, dass das Auslassventil (9, 7, 5) des zweiten Steuerventils (2), über welches die zweite Steuerkammer (38) mit der Atmosphäre verbindbar ist, von einer in dem zweiten Steuerkolben (37) vorgesehen Ausnehmung und einem mit dem Anker (5) des zweiten Steuerventils (2) zusammenwirkenden Ventilkörper (7) gebildet wird.

8. Magnetventileinrichtung nach Anspruch 7, dadurch gekennzeichnet, dass der Ventilkörper (7) an der dem zweiten Steuerkolben (37) zugewandten Stirnseite des Ankers (5) befestigt ist.

9. Magnetventileinrichtung nach wenigstens einem der vorhergehenden Ansprüche, dadurch gekennzeichnet, dass die der zweiten Steuerkammer (38) zugewandte Wirkfläche des zweiten Steuerkolbens (37) grösser ausgebildet ist als die der Ausgangskammer (31) zugewandte Wirkfläche des zweiten Steuerkolbens (37).

10. Magnetventileinrichtung nach wenigsten einem der vorhergehenden Ansprüche, dadurch gekennzeichnet, dass die Steuerkolben als Membrankolben ausgebildet sind.

11. Magnetventileinrichtung nach wenigstens einem der vorhergehenden Ansprüche, dadurch gekennzeichnet, dass die Steuerventile als Elektromagnetventile ausgebildet sind.

**Claims**

1. Magnetic valve assembly having the following features:

a) there is provided an entry chamber (30) which is connected to a pressure medium source (32);

b) there is provided an exit chamber (31) which is connected to a consumer;

c) the entry chamber (30) and the exit chamber (31) can be connected to each other via an inlet valve (14, 15, 29);

d) the valve body (15, 29) of the inlet valve (14, 15, 29) is arranged on a first control piston (15), which separates the entry chamber (30) from a first control chamber (28);

e) there is provided a first control valve (22), via which the first control chamber (28) can be charged with air and vended;

f) there is provided an outlet valve (35, 36, 37), via which the exit chamber (31) can be connected to the atmosphere;

g) the valve body (36, 37) of the outlet valve (35, 36, 37) is arranged on a second control piston (37), which separates the exit chamber (31) from a second control chamber (38);

h) there is provided a second control valve (2), via which the second control chamber (38) can be charged with air and vented;

characterised in that the first control valve (22) is so constructed and so arranged that the first control chamber (28) can be connected on the one hand to the pressure medium source (32) and on the other hand to the exit chamber (31).

2. Magnetic valve assembly according to claim 1, characterised in that the outlet valve (26, 25, 19) of the first control valve (22), via which the first control chamber (28) can be connected to the exit chamber (31), is formed by a recess provided in the first control piston (15) and a valve body (25) which cooperates with the armature (19) of the first control valve (22).

3. Magnetic valve assembly according to claim 2, characterised in that the valve body (25) is fastened to the face of the armature (19) that faces the control piston (15).

4. Magnetic valve assembly according to at least one of the preceding claims, characterised in that the effective surface of the control piston (15) that faces the first control chamber (28) is larger than the effective surface of the first control piston (15) that faces the entry chamber (30).

5. Magnetic valve assembly according to claim 1, characterised in that the second control valve (2) is so constructed and so arranged that the second control chamber (38) can be connected on the one hand to the pressure medium source (32) and on the other hand to the atmosphere.

6. Magnetic valve assembly according to claim 1, characterised in that the second control valve (2) is so constructed and so arranged that the second control chamber (38) can be connected on the one hand to the exit chamber (31) and on the other hand to the atmosphere.

7. Magnetic valve assembly according to at least one of the preceding claims, characterised in that the outlet valve (9, 7, 5) of the second control valve (2), via which the second control chamber (38) can be connected to the atmosphere, is formed by a recess provided in the second control piston (37) and a valve body (7) which cooperates with the armature (5) of the second control valve (2).

8. Magnetic valve assembly according to claim 7, characterised in that the valve body (7) is fastened to the face of the armature (5) that faces the second control piston (37).

9. Magnetic valve assembly according to at least one of the preceding claims, characterised in that the effective surface of the second control piston (37) that faces the second control chamber (38) is larger than the effective surface of the second control piston (37) that faces the exit chamber (31).

10. Magnetic valve assembly according to at least one of the preceding claims, characterised in that the control pistons are in the form of diaphgram pistons.

11. Magnetic valve assembly according to at least one of the preceding claims, characterised in that the control valves are in the form of electromagnetic valves.

## Revendications

1. Distributeur électromagnétique possédant les particularités suivantes:

a) il est prévu une chambre d'entrée (30) reliée à la source de fluide sous pression (32);

b) il est prévu une chambre de sortie (31) reliée à un récepteur;

c) la chambre d'entrée (30) et la chambre de sortie (31) peuvent être réunies l'une à l'autre par l'intermédiaire d'une soupape d'admission (14, 15, 29);

d) l'élément obturateur (15, 29) de la soupape d'admission (14, 15, 29) est prévu sur un premier piston de commande (15) qui sépare la chambre d'entrée (30) d'une première chambre de commande (28);

e) il est prévu une première soupape de commande (22) par l'intermédiaire de laquelle une première chambre de commande (28) peut être alimentée en air ou mise à la décharge d'air;

f) il est prévu une soupape d'échappement (35, 36, 37) par l'intermédiaire de laquelle la chambre de sortie (31) peut être reliée à l'atmosphère;

g) l'élément obturateur (36, 37) de la soupape d'échappement (35, 36, 37) est prévu sur un deuxième piston de commande (37) qui sépare la chambre de sortie (31) d'une deuxième chambre de commande (38);

h) il est prévu une deuxieme soupape de commande (2) par l'intermédiaire de laquelle la deuxième chambre de commande (38) peuit être alimentée en air ou mise à la décharge d'air;

caractérisé en ce que la première soupape de commande (22) est constituée et agencée de manière que la première chambre de commande (28) puisse être reliée, d'une part, à la source de fluide sous pression (32) et, d'autre part, à la chambre de sortie (31).

2. Distributeur éléctromagnétique selon la revendication 1, caractérisé en ce que la soupape d'échappement (26, 25, 19) de la première soupape de commande (22), par l'intérmediaire de laquelle la première chambre de commande (28) peut être reliée à la chambre de sortie (31), est formée par un évidement prévu dans le premier piston de commande (15), et par un élément oburateur (25) qui coopère avec l'armature (19) de la première soupape de commande (22).

3. Distributeur électromagnétique selon la revendication 2, caractérisé en ce que l'élement obturateur (25) est fixé à la face frontale de l'armature (19) qui est dirigée vers le piston de commande (15).

4. Distributeur électromagnétique selon au moins l'une des revendications précédentes, caractérisé en ce que la surface travaillante du piston de commande (15) qui est dirigée vers la première chambre de commande (28) est plus grande que la surface travaillante du premier piston de commande (15) qui est dirigée vers la chambre d'entrée (30).

5. Distributeur électromagnétique selon la revendication 1, caractérisé en ce que la deuxième soupape de commande (2) est costituée et agencée de manière que la deuxième chambre de commande (38) puisse être reliée, d'une part, à la source de fluide sous pression (32) et, d'autre part, à l'atmosphère.

6. Distributeur éléctromagnétique selon la revendication 1, caractérisé en ce que la deuxième soupape de commande (2) est costituée et agencée de telle manière que la deuxième chambre de commande (38) puisse être reliée, d'une part, à la chambre de sortie (31) et, d'autre part, à la chambre de sortie (31) et, d'autre part, à l'atmosphère.

7. Distributeur éléctromagnétique selon au moins l'une des revendications précédentes, caractérisé en ce que la soupape d'échappement (9, 7, 5) de la deuxième soupape de commande (2), par l'intermédiaire de laquelle la deuxième chambre de commande (38) peut être reliée à l'atmosphère, est formée par un évidement prévu dans le deuxième piston de commande (37) et par un élément obturateur (7) qui coopère avec l'armature (5) de la deuxième soupape de commande (2).

8. Distributeur éléctromagnétique selon la revendication 7, caractérisé en ce que l'élément obturateur (7) est fixé à la face frontale de l'armature (5) qui est dirigée vers le deuxième piston de commande (37).

9. Distributeur éléctromagnétique selon au moins l'une des revendications précédentes, caractérisé en ce que la surface travaillante du deuxième piston de commande (37) qui est dirigée vers la deuxième chambre de commande (38) est plus grande que la surface travaillante du deuxième piston de commande (37) qui est dirigée vers la chambre de sortie (31).

10. Distributeur électromagnétique selon au moins l'une des revendications précédentes, caractérisé en ce que les pistons de commande sont constitués par des pistons du type à membrane.

11. Distributeur électromagnétique selon au moins l'une des revendications précédentes, caractérisé en ce que les soupapes de commande sont constitués par des électrovalves.